# DEMANDE DE BREVET EUROPEEN

(11) **EP 4 383 534 A1**
(43) Date de publication de la demande: **12.06.2024**
(21) Numéro de dépôt: 23214152.3
(22) Date de dépôt: 05.12.2023
(51) Int. Cl.: H02M 1/00, H02M 1/42, H02J 9/06

(54) **CIRCUIT D'ALIMENTATION SANS INTERRUPTION**

(30) Priorité: 09.12.2022 FR 2213055
(71) Demandeur: COMMISSARIAT À L'ÉNERGIE ATOMIQUE ET AUX ÉNERGIES ALTERNATIVES, 75015 Paris (FR)
(72) Inventeur: LANNELUC, Charley, 38054 GRENOBLE Cedex 09 (FR); PERICHON, Pierre, 38054 GRENOBLE Cedex 09 (FR); STERNA, Léo, 38054 GRENOBLE Cedex (FR)
(74) Mandataire: Atout PI Laplace

(57) **Abrégé**

L'invention concerne un circuit d'alimentation sans interruption comprenant un circuit onduleur configuré pour être connecté à un premier réseau électrique alternatif, ledit circuit d'alimentation étant en outre configuré pour adopter une première configuration pour une alimentation du premier réseau électrique alternatif à partir d'un deuxième réseau électrique alternatif, première configuration dans laquelle un circuit correcteur de facteur de puissance est configuré pour être connecté au deuxième réseau électrique alternatif de manière à délivrer une tension continue au circuit onduleur, ledit circuit correcteur de facteur de puissance comprenant une inductance, et un premier bras d'interrupteurs appartenant au circuit correcteur de facteur de puissance et au circuit onduleur ; et une deuxième configuration pour une alimentation du premier réseau électrique alternatif à partir d'une source de tension continue, deuxième configuration dans laquelle un circuit convertisseur DCDC est configuré pour être connecté à la source de tension continue de manière à délivrer une tension continue au circuit onduleur, ladite inductance appartenant en outre audit circuit convertisseur DCDC.

## Description

L'invention concerne un circuit d'alimentation sans interruption, notamment un circuit d'alimentation sans interruption configuré pour alimenter un premier réseau électrique alternatif à partir d'un deuxième réseau électrique alternatif, et en cas de défaillance du deuxième réseau électrique alternatif, alimenter le premier réseau électrique alternatif à partir d'une source de tension continue.

Les alimentations sans interruption ou ASI, encore appelées UPS (pour « Uninterruptible power supply » en anglais) sont des dispositifs électriques destinés à permettre une continuité de service en cas de coupure dans l'alimentation électrique d'un système électrique à partir d'un réseau électrique. En faisant l'interface entre le réseau électrique et le système, l'alimentation sans interruption peut aussi améliorer la qualité de l'énergie offerte par le réseau électrique. Parmi les systèmes utilisant les ASIs, on compte les banques, les hôpitaux, les universités, ou des centres informatiques (« data center » en anglais).

Typiquement, un ASI est configuré pour réaliser deux conversions électriques. Dans un fonctionnement normal, l'ASI met en oeuvre une conversion alternative-alternative (AC/AC) dans laquelle une énergie prélevée sur le réseau électrique alternatif est délivrée au système électrique alternatif. En particulier, le circuit convertisseur AC/AC peut comprendre un premier étage corrigeant un facteur de puissance prélevé sur le réseau électrique et convertissant la tension alternative du réseau électrique en une tension continue ; et un étage onduleur convertissant la tension continue en une tension alternative délivrée au système électrique. De manière connue en soi, l'étage corrigeant le facteur de puissance fait en sorte que le courant et la tension délivrés par le réseau électrique alternatif soient en phase. On évite ainsi une injection d'énergie réactive. Ce type d'ASI, mettant en oeuvre une conversion alternative-continue et une conversion continue-alternative, est particulièrement avantageux en ce qu'il permet de délivrer au système électrique alternatif une énergie de meilleure qualité que celle délivrée par le réseau électrique alternatif. En cas de défaillance du réseau électrique alternatif, une conversion continue-alternative (DC/AC) est mise en oeuvre entre une source d'énergie électrique continue, telle qu'une batterie, et le système électrique alternatif de manière à poursuivre l'alimentation du système électrique alternatif.

Pour diminuer les couts et augmenter la densité de puissance de l'ASI, les fabricants d'ASI cherchent à mutualiser des composants électriques entre le circuit réalisant la conversion AC/AC et celui réalisant la conversion DC/AC. On connait la publication de demande de brevet US 2022/0181905 A1 dans laquelle le convertisseur AC/AC est en partie réutilisé dans la conversion DC/AC. Cependant le document divulgue un ASI indépendant en fréquence et en tension, un ASI qui permet délivrer au système électrique un signal alternatif ayant une fréquence et une tension efficace différentes de celle du réseau électrique. Cependant, certains utilisateurs peuvent avoir besoin de la seule fonctionnalité de tension indépendante, à savoir un ASI délivrant une tension indépendante de celle délivrée par le réseau électrique, mais en conservant la fréquence du réseau électrique.

Il est donc recherché un ASI à tension indépendante dans lequel les fonctions de conversion AC/AC et DC/AC sont au moins en partie mutualisées pour réduire le cout et augmenter la densité de puissance de l'ASI.

A cet effet, l'invention propose un circuit d'alimentation sans interruption comprenant un circuit onduleur configuré pour être connecté à un premier réseau électrique alternatif, ledit circuit d'alimentation étant en outre configuré pour adopter :
i. une première configuration pour une alimentation du premier réseau électrique alternatif à partir d'un deuxième réseau électrique alternatif, première configuration dans laquelle un circuit correcteur de facteur de puissance est configuré pour être connecté au deuxième réseau électrique alternatif de manière à délivrer une tension continue au circuit onduleur, ledit circuit correcteur de facteur de puissance comprenant une inductance, et un premier bras d'interrupteurs appartenant au circuit correcteur de facteur de puissance et au circuit onduleur ; et
ii. une deuxième configuration pour une alimentation du premier réseau électrique alternatif à partir d'une source de tension continue, deuxième configuration dans laquelle un circuit convertisseur DCDC est configuré pour être connecté à la source de tension continue de manière à délivrer une tension continue au circuit onduleur, ladite inductance appartenant en outre audit circuit convertisseur DCDC.

Ainsi, le circuit selon l'invention mutualise des composants entre le circuit correcteur de facteur de puissance et le circuit onduleur. D'autre part, le circuit mutualise des composants entre le circuit convertisseur DCDC et le circuit correcteur de facteur de puissance. Le circuit d'alimentation selon l'invention a donc une intégration améliorée de ses composants.

Selon un mode de réalisation, le circuit correcteur de facteur de puissance comprend un deuxième bras d'interrupteurs dont les bornes sont connectées aux bornes du premier bras d'interrupteurs, une première borne de ladite inductance étant connectée au point milieu d'un des premier et deuxième bras, le point milieu de l'autre bras formant une première borne d'entrée du circuit correcteur de facteur de puissance et une deuxième borne de ladite inductance formant une deuxième borne d'entrée du circuit correcteur de facteur de puissance, lesdites première et deuxième bornes du circuit correcteur de facteur de puissance étant configurées pour être connectées au deuxième réseau électrique alternatif.

Selon une variante, le circuit convertisseur DCDC comprend en outre le bras d'interrupteurs auquel ladite inductance est connectée.

Selon un mode de réalisation, dans les première et deuxième configurations, le circuit onduleur comprend un troisième bras d'interrupteurs dont les bornes sont connectées au premier bras d'interrupteurs, le point milieu du troisième bras formant une première borne de sortie du circuit onduleur, ladite première borne de sortie du circuit onduleur et une deuxième borne de sortie du circuit onduleur étant configurées pour être connectées au premier réseau électrique alternatif.

Selon un mode de réalisation, le bras d'interrupteurs du correcteur de facteur de puissance non connecté à l'inductance forme un bras de l'onduleur dans la deuxième configuration, le point milieu de ce bras formant la deuxième borne de sortie du circuit onduleur.

Selon une variante, l'inductance est connectée au premier bras d'interrupteurs et, dans la deuxième configuration, le point milieu du deuxième bras d'interrupteurs forme la deuxième borne de sortie du circuit onduleur.

Selon une variante, l'inductance est connectée au deuxième bras d'interrupteurs, et dans la deuxième configuration, le point milieu du premier bras forme la deuxième borne de sortie du circuit onduleur.

Selon un mode de réalisation, dans la première configuration, le point milieu du premier bras d'interrupteurs forme la deuxième borne de sortie du circuit onduleur.

Selon un mode de réalisation, dans la première configuration, un point milieu du premier bras d'interrupteurs est destiné à être connecté au neutre du premier réseau alternatif et au neutre du deuxième réseau alternatif.

Selon un mode de réalisation, le circuit d'alimentation sans interruption comprend une capacité de liaison continue connectée aux bornes du premier bras d'interrupteurs.

Selon un mode de réalisation, le circuit d'alimentation sans interruption comprend un ensemble d'interrupteurs configurés pour permettre un basculement entre la première et la deuxième configuration et vice-versa.

Selon une variante, l'ensemble d'interrupteurs comprend deux interrupteurs configurés pour respectivement dans la première et la deuxième configuration, connecter et déconnecter le circuit correcteur de facteur de puissance à la deuxième alimentation électrique alternative.

Selon une variante, l'ensemble d'interrupteurs comprend un interrupteur configuré pour respectivement dans la première et la deuxième configuration, déconnecter et connecter la source de tension continue à ladite inductance.

Selon une variante, l'ensemble d'interrupteurs comprend un interrupteur configuré pour, dans la première configuration, connecter la deuxième borne de sortie du circuit onduleur avec le point milieu du premier bras d'interrupteurs, et pour, dans la deuxième configuration, connecter la deuxième borne de sortie du circuit onduleur avec le point milieu du deuxième bras d'interrupteurs.

Selon un mode de réalisation, le circuit d'alimentation sans interruption est configuré pour adopter la deuxième configuration en cas de défaillance du deuxième réseau électrique alternatif.

D'autres caractéristiques et avantages de la présente invention apparaîtront mieux à la lecture de la description qui suit en relation aux figures annexées suivantes :
[Fig. 1] : la figure 1 représente un circuit d'alimentation sans interruption selon un premier exemple de l'invention ;
[Fig. 2] : la figure 2 représente un circuit d'alimentation sans interruption selon un deuxième exemple de l'invention ;
[Fig. 3] : la figure 3 représente l'allure d'un signal dans le circuit d'alimentation sans interruption de la figure 1 ;
[Fig.4] : la figure 4 représente l'allure d'un autre signal dans le circuit d'alimentation sans interruption de la figure 1 ;
[Fig. 5] : la figure 5 représente l'allure d'encore un autre signal dans le circuit d'alimentation sans interruption de la figure 1.

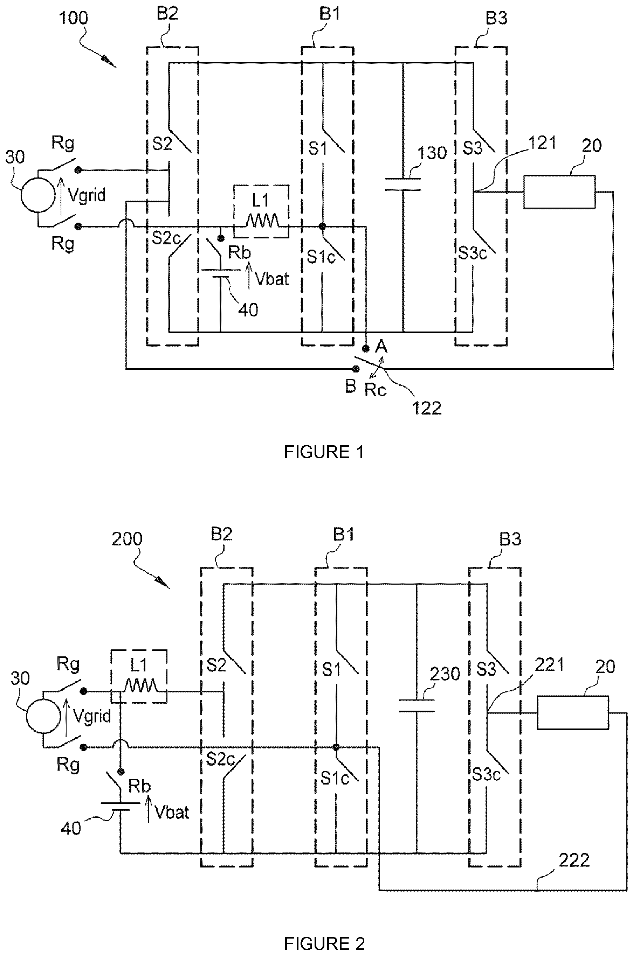

La figure 1 présente un circuit d'alimentation sans interruption 100 selon un exemple de l'invention. Le circuit d'alimentation 100 est capable de prendre au moins deux configurations pour assurer une alimentation sans coupure d'un premier réseau électrique alternatif 20 auquel il est connecté. Le premier réseau électrique alternatif 20 appartient à une installation pour laquelle toute coupure dans l'alimentation électrique doit être évitée. Une telle installation est par exemple une banque, un hôpital, une université, ou un centre informatique.

Dans la première configuration, le circuit d'alimentation 100 assure une alimentation électrique du premier réseau électrique alternatif 20 à partir d'un deuxième réseau électrique alternatif 30. Le deuxième réseau électrique alternatif 30 est notamment un réseau électrique publique.

Le circuit d'alimentation 100 comprend un circuit correcteur de facteur de puissance, qui fait notamment en sorte que le courant absorbé sur le deuxième réseau électrique 30 soit en phase avec la tension du deuxième réseau électrique 30. A cet effet, le circuit correcteur de facteur de puissance comprend une inductance L1 et des interrupteurs S1, S1c, S2, S2c. Le circuit correcteur de facteur de puissance convertit en outre la tension alternative issue du second réseau électrique 30 en une tension électrique continue.

Le circuit d'alimentation 100 comprend en outre un circuit onduleur qui est connecté au premier réseau électrique alternatif 20. En particulier, grâce à ses interrupteurs S1, S1c, S3, S3c, le circuit onduleur convertit la tension électrique continue délivrée par le circuit correcteur de facteur de puissance en une tension alternative qui est délivrée au premier réseau électrique 20.

Le circuit correcteur de facteur de puissance et le circuit onduleur partagent un premier bras d'interrupteurs B1. Ceci est en particulier possible, du fait que le circuit d'alimentation 100 est indépendant en tension, mais pas en fréquence. Autrement dit, le circuit d'alimentation 100 régule la tension efficace délivrée au premier réseau électrique 20, de sorte qu'elle peut être différente de celle délivrée par le deuxième réseau électrique 30. Cependant, la fréquence délivrée par le circuit d'alimentation 100 reste égale à celle du deuxième réseau électrique 30. Notamment, le bras B1 commute à la fréquence du réseau électrique 30, de manière à permettre une correction du facteur de puissance délivré par le deuxième réseau électrique 30, mais aussi une conversion DC/AC pour délivrer au premier réseau électrique 20 un signal alternatif ayant une fréquence égale à celle du deuxième réseau électrique 30. Le premier bras d'interrupteurs B1 comprend notamment un interrupteur S1 connecté à un potentiel haut du circuit correcteur de facteur de puissance et du circuit onduleur. Et un interrupteur S1c connecté à un potentiel bas du circuit correcteur de facteur de puissance et du circuit onduleur. Les deux interrupteur S1, S1c ont une borne commune qui constitue le point milieu du premier bras B1. En étant commun au circuit correcteur de facteur de puissance et au circuit onduleur, le premier bras B1 reçoit un courant réduit par rapport à un circuit de l'art antérieur, ce qui améliore le rendement du circuit d'alimentation sans interruption lorsqu'il fonctionne dans la première configuration.

En particulier, une capacité de liaison continue 130 est connectée aux bornes du premier bras B1. Cette capacité 130 forme un tampon entre le circuit correcteur de facteur de puissance et le circuit onduleur, et stabilise la tension continue délivrée au circuit onduleur par le circuit correcteur de facteur de puissance.

Dans la deuxième configuration, le circuit d'alimentation 100 comprend un circuit convertisseur DCDC qui est connecté à une source de tension continue 40 pour notamment délivrer une tension continue en entrée du circuit onduleur. Ainsi, en cas de défaillance du deuxième réseau électrique alternatif 30, la source de tension continue 40 permet une continuité de l'alimentation du premier réseau électrique 20. En particulier, il s'agit d'une alimentation temporaire, le temps qu'une source électrique robuste soit mise en route, telle qu'un groupe électrogène par exemple. La source de tension continue 40 peut être, entre autres, une batterie, comme par exemple une batterie lithium/plomb, ou une super capacité. La batterie peut être embarquée dans un rack du circuit d'alimentation sans interruption. Ce circuit réutilise l'inductance L1 du circuit correcteur de facteur de puissance, ce qui permet d'améliorer l'intégration du circuit d'alimentation sans interruption 100. Ceci est notamment possible du fait que, dans la deuxième configuration, le circuit correcteur de facteur de puissance n'est pas connecté au deuxième réseau électrique, rendant ainsi possible une réutilisation de ses composants par le circuit convertisseur DCDC.

La topologie du circuit d'alimentation sans interruption 100 est décrite plus précisément dans ce qui suit.

Le circuit correcteur de facteur de puissance comprend notamment un deuxième bras d'interrupteurs B2. Les bornes de ce deuxième bras B2 sont connectées à celles du premier bras B1. En particulier, le deuxième bras B2 comprend un interrupteur S2 connecté au potentiel haut du circuit correcteur de facteur de puissance et un interrupteur S2c connecté au potentiel bas du correcteur de facteur de puissance. Les deux interrupteurs S2, S2c ont une borne commune qui constitue le point milieu du deuxième bras B2. Comme précédemment décrit, le circuit correcteur de facteur de puissance comprend en outre le premier bras d'interrupteurs B1 et l'inductance L1.

Dans l'exemple de la figure 1, une première borne de l'inductance L1 est connectée au point milieu du premier bras B1. Le circuit correcteur de facteur de puissance est connecté au deuxième réseau électrique 30 par l'intermédiaire d'une première borne, qui correspond au point milieu du deuxième bras B2. Une deuxième borne du circuit correcteur de facteur de puissance est formée par une deuxième borne de l'inductance, qui correspond à la borne de l'inductance qui n'est pas connectée au point milieu du premier bras B1. Cependant, l'inductance L1 peut être connectée au point milieu du deuxième bras B2, comme par exemple dans une alimentation sans interruption 200 selon un autre exemple de l'invention illustré en figure 2, qui sera décrite plus loin.

Outre le premier bras d'interrupteurs B1, le circuit onduleur comprend un troisième bras d'interrupteurs B3. Les bornes de ce troisième bras B3 sont connectées à celles du premier bras B1. En particulier, le troisième bras B3 comprend un interrupteur S3 connecté au potentiel haut du circuit onduleur et un interrupteur S3c connecté au potentiel bas du circuit onduleur. Les deux interrupteurs S3, S3c ont une borne commune qui constitue le point milieu du troisième bras B3. Ce point milieu forme une première borne de sortie 121 du circuit onduleur. Le premier réseau électrique 20 est connecté entre la première borne de sortie 121 et une deuxième borne de sortie 122 du circuit onduleur.

Notamment, le circuit d'alimentation sans interruption 100 bascule entre la première et la deuxième configuration grâce à un jeu d'interrupteurs Rg, Rb, Rc.

En particulier, deux interrupteurs Rg permettent de connecter la deuxième alimentation électrique 30 au circuit d'alimentation électrique 100 dans la première configuration. Dans la deuxième configuration, les interrupteurs Rg déconnectent la deuxième alimentation électrique 30. A cet effet, un premier interrupteur Rg est de préférence connecté entre la première borne du circuit correcteur de facteur de puissance et une première borne du deuxième réseau électrique 30. Un deuxième interrupteur Rg est de préférence connecté entre la deuxième borne du circuit correcteur de facteur de puissance et une deuxième borne du deuxième réseau électrique 30. Ces deux interrupteurs Rg sont notamment configurés pour s'ouvrir ou se fermer simultanément.

Notamment, le jeu d'interrupteur comprend en outre un troisième interrupteur Rb qui, dans la première configuration, déconnecte la source électrique continue 40 de l'inductance L1 ; et dans la deuxième configuration connecte la source électrique continue 40 à l'inductance L1. Ainsi, la source de tension continue 40 se connecte à la borne de l'inductance L1 qui forme la deuxième borne d'entrée du circuit correcteur de facteur de puissance dans la première configuration. L'inductance L1 forme alors une inductance du circuit convertisseur DCDC. En particulier, le bras d'interrupteurs B1 connecté à l'inductance appartient aussi au convertisseur DCDC.

Dans l'exemple de la figure 1, le jeu d'interrupteur comprend un quatrième interrupteur Rc. Dans la première configuration, cet interrupteur Rc connecte la deuxième borne 122 du circuit onduleur avec le point milieu du premier bras B1. Dans la deuxième configuration, le quatrième interrupteur Rc connecte la deuxième borne 122 du circuit onduleur au point milieu du deuxième bras d'interrupteurs B2.

Les premier et deuxième interrupteurs Rg, le troisième interrupteur Rb, et le quatrième interrupteur RC sont notamment des relais, pilotés en particulier par une unité de commande du circuit d'alimentation sans interruption 100.

Un fonctionnement du circuit d'alimentation sans interruption 100 dans chaque configuration est plus particulièrement décrit dans ce qui suit.

Dans la première configuration, le deuxième réseau électrique 30 est connecté aux bornes d'entrées du circuit correcteur de facteur de puissance, et délivre une tension alternative Vgrid. Le circuit correcteur de facteur de puissance est implémenté par le premier bras B1 et le deuxième bras B2. La deuxième borne de sortie 122 de l'onduleur est connectée au point milieu du premier bras B1. Ainsi, le circuit onduleur est implémenté par le premier bras B1 et le troisième bras B3. En particulier, dans cette première configuration, le point milieu du premier bras B1 est connecté au neutre du premier réseau électrique 20 et au neutre du deuxième réseau électrique 30. Les neutres du premier 20 et du deuxième 30 réseaux sont donc reliées entre eux. Le circuit d'alimentation a alors une topologie dite à « neutre passant ».

En particulier, le deuxième bras B2 découpe le signal délivré par le deuxième réseau électrique alternatif 30 pour une correction de facteur de puissance. Les interrupteurs S1, S1c du premier bras B1 servent à aiguiller la décharge de l'inductance L1. Par exemple, le circuit correcteur de facteur de puissance convertit une tension efficace du deuxième réseau électrique 30 de 230V, en une tension continue comprise entre 350 et 400V. Le troisième bras B3 découpe la tension continue, disponible notamment aux bornes de la capacité de liaison continue 130. Par exemple, le circuit onduleur convertit une tension continue comprise entre 350 et 400V en un signal de tension efficace 230V ou 110V. Notamment, le premier bras d'interrupteurs B1 commute à la fréquence du deuxième réseau électrique 30, par exemple à 50 ou 60Hz. Les deuxième B2 et troisième B3 bras commutent dans une gamme de fréquence plus large, par exemple entre 20 et 70kHz.

Dans la deuxième configuration, le deuxième réseau électrique 30 est déconnecté des bornes d'entrées du circuit correcteur de facteur de puissance. La source de tension continue 40 est connectée à l'inductance L1, en particulier à la borne de l'inductance L1 qui n'est pas connectée au premier bras B1. Le premier bras B1 appartient également au convertisseur DCDC. Le convertisseur DCDC est donc implémenté par l'inductance L1 et le premier bras B1, qui forment un convertisseur DCDC élévateur. La deuxième borne de sortie 122 de l'onduleur est connectée au point milieu du deuxième bras B2. Ainsi, le circuit onduleur est implémenté par le deuxième bras B2 et le troisième bras B3, qui forment notamment un circuit onduleur trois niveaux à pont complet.

Notamment, le premier bras B1 découpe la tension continue Vbat délivrée par la source de tension continue 40. Par exemple, la tension continue Vbat est égale à 200V et le convertisseur DCDC délivre une tension comprise entre 350 et 400V sur le bus continu. A cet effet, les interrupteurs S1, S1c du premier bras B1 commutent par exemple à une fréquence comprise entre 10kHZ et 30kHz, notamment 20kHz. Les deuxième B2 et troisième B3 bras découpent la tension continue délivrée par le convertisseur DCDC, notamment avec une fréquence comprise entre 15kHz et 70kHz.

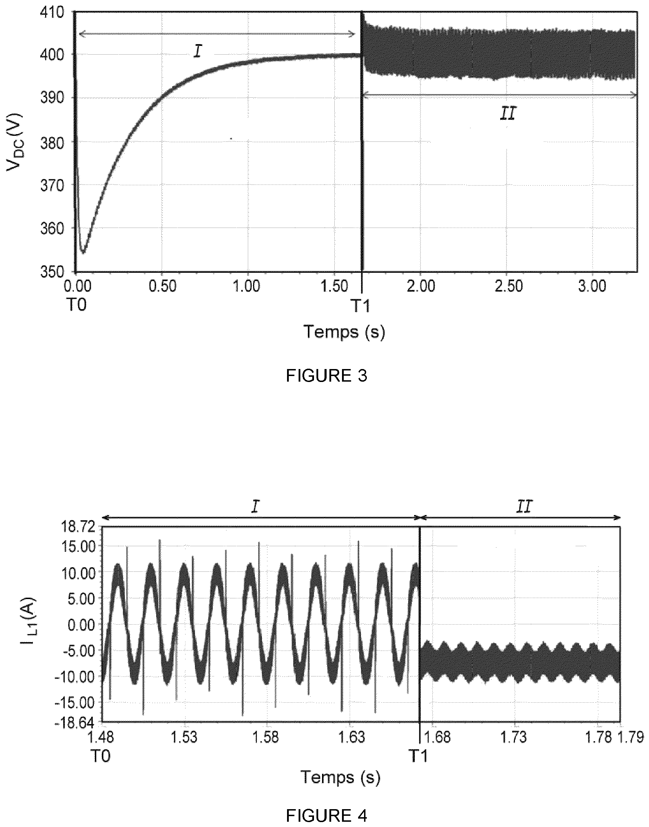

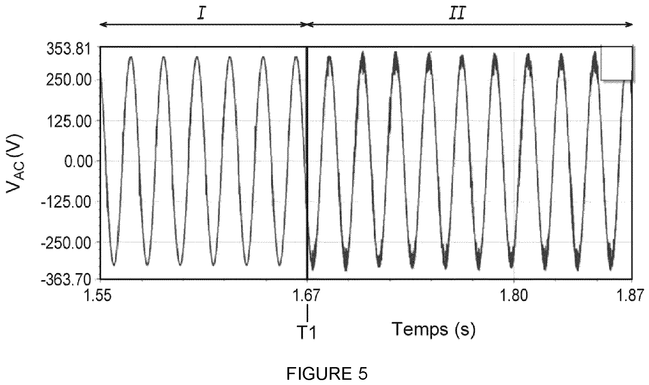

Les figures 3 à 5 montrent des courbes illustrant les signaux électriques parcourant le circuit d'alimentation 100 en cours de fonctionnement. La courbe en figure 3 représente la tension V_{DC} du bus DC, c'est-à-dire aux bornes du premier bras B1, notamment aux bornes de la capacité de liaison continue 130. Les courbes en figures 4 et 5 représentent respectivement le courant I_{L1} parcourant l'inductance L1 et la tension alternative V_{AC} délivrée au premier réseau électrique 20.

A l'instant T0, le circuit d'alimentation 100 commence à fonctionner dans la première configuration I, c'est-à-dire réalise une conversion AC/AC du deuxième réseau électrique 30 vers le premier réseau électrique 20. Dans la première configuration I, le courant dans l'inductance L1 est découpé à la fréquence de découpage du deuxième bras B2 et modulé à la fréquence du deuxième réseau électrique alternatif, notamment 50Hz, pour être en phase avec la tension du deuxième réseau électrique alternatif. Le courant a en outre une valeur RMS qui est fonction de la puissance transmise et de la tension délivrée par le deuxième réseau électrique alternatif. A l'instant T1≈1,67s, le deuxième réseau électrique 30 est déconnecté et la source de tension continue 40 est connectée. C'est notamment le cas, lors d'une perte du deuxième réseau électrique alternatif. Lors du passage de la première configuration I à la deuxième configuration II, on observe un changement du courant circulant dans l'inductance L1. Dans la deuxième configuration II, l'inductance L1 appartient au circuit convertisseur DC/DC, qui est en particulier un élévateur de tension. L'inductance L1 est alors parcourue par un courant haché à la fréquence de découpage du premier bras B1, avec une valeur RMS qui dépend de la puissance transmise et de la tension délivrée par la source de tension continue 40. Entre les deux configurations I, II la tension du bus continu se maintient à 400V et la tension de sortie de 230Vefficace reste bien régulée.

Dans ce qui suit, l'exemple de circuit d'alimentation 200 de la figure 2 sera décrit suivant ses différences par rapport à l'exemple illustré en figure 1.

Dans l'exemple de la figure 2, une première borne de l'inductance L1 est connectée au point milieu du deuxième bras B2. La première borne du circuit correcteur de facteur de puissance correspond au point milieu du premier bras B1. La deuxième borne du circuit correcteur de facteur de puissance est formée par une deuxième borne de l'inductance, qui correspond à la borne de l'inductance qui n'est pas connectée au point milieu du deuxième bras B2.

Le jeu d'interrupteurs comprend les premier interrupteurs Rg et le troisième interrupteur Rb déjà décrits en relation avec la figure 1. Cependant, l'alimentation électrique 200 est dépourvue du quatrième interrupteur Rc. La deuxième borne 222 du circuit onduleur est connectée au point milieu du premier bras B1 en permanence. L'avantage de ce circuit d'alimentation 200 par rapport au premier circuit d'alimentation 100 est donc que le jeu d'interrupteur comprend moins d'interrupteurs, ce qui diminue l'encombrement, le cout et la complexité d'intégration. Cependant, le choix entre le premier circuit d'alimentation 100 et le deuxième circuit d'alimentation 200 est fonction du paramètre que l'on souhaite privilégier, par exemple la température, l'usure mécanique, ou la consommation électrique. Le point milieu du troisième bras B3 forme notamment la première borne de sortie 221 du circuit onduleur.

Dans sa première configuration, le circuit d'alimentation 200 a une topologie similaire à celle du circuit d'alimentation 100 précédemment décrit, si ce n'est la position de l'inductance L1. Le fonctionnement dans la première configuration reste également similaire à celui du circuit d'alimentation 100 illustré en figure 1.

Cependant, la topologie du circuit d'alimentation 200 dans sa deuxième configuration est différente de celle du circuit d'alimentation 100 de la figure 1.

Dans la deuxième configuration, le deuxième réseau électrique 30 est déconnecté des bornes d'entrée du circuit correcteur de facteur de puissance. La source de tension continue 40 est connectée à l'inductance L1, en particulier à la borne de l'inductance L1 qui n'est pas connectée au deuxième bras B2. Le deuxième bras B2 appartient également au convertisseur DCDC. Le convertisseur DCDC est donc implémenté par l'inductance L1 et le deuxième bras B2, qui forment un convertisseur DCDC élévateur. La deuxième borne de sortie 222 de l'onduleur est connectée au point milieu du premier bras B1. Ainsi, le circuit onduleur est implémenté par le premier bras B1 et le troisième bras B3.

Notamment, le deuxième bras B2 découpe la tension continue Vbat délivrée par la source de tension continue 40. Par exemple, la tension continue Vbat est égale à 200V et le convertisseur DCDC délivre une tension comprise entre 360 et 400V sur le bus continu. A cet effet, les interrupteurs S2, S2c du deuxième bras B2 commutent par exemple à une fréquence comprise entre 10kHz et 30kHz. Les premier B1 et troisième B3 bras découpent la tension continue délivrée par le convertisseur DCDC. Notamment avec une fréquence comprise entre 15kHz et 70kHz.

Le circuit d'alimentation sans interruption 200 illustré en figure 2, comprend notamment une capacité de liaison continue 230 qui est similaires à celle décrite en relation avec la figure 1.

L'invention permet donc d'obtenir un circuit convertisseur AC/AC mutualisé avec le circuit convertisseur DC/AC sans surcout majeur pour le circuit d'alimentation 100, 200.

Les interrupteurs des bras B1, B2, B3 doivent être dimensionnés pour supporter les fonctionnements du circuit d'alimentation sans interruption 100, 200. Du fait de leur haute fréquence dans la première configuration, les interrupteurs S2, S2c du deuxième bras B2 et ceux S3, S3c du troisième bras B3 sont de préférence réalisés dans une technologie qui supporte les hautes fréquences, comme par exemple en technologie GaN ou SiC. Les interrupteurs S1, S1c du premier bras 1 connaissent des fréquences relativement plus faibles et peuvent être réalisées en technologie silicium. Cependant, les interrupteurs implémentant le circuit convertisseur DCDC doivent pouvoir aussi supporter le courant délivré par la source de tension continue 40 dans la deuxième configuration, notamment pour une durée maximale de 10mn. Ces interrupteurs sont donc surdimensionnés par rapport aux exigences de la première configuration. A cet égard, la variante dans laquelle le premier bras B1 participe au convertisseur DCDC est plus avantageuse que celle dans laquelle le deuxième bras B2 participe au circuit convertisseur DCDC. En effet, surdimensionner les interrupteurs induit une augmentation de leur cout. Or, les interrupteurs en technologie GaN ou SiC sont plus couteux que ceux en technologie silicium. Les autres interrupteurs qui ne sont pas impliqués dans le circuit convertisseur DCDC sont de préférence dimensionnés uniquement pour la première configuration, quand bien même leurs performances seraient moindres dans la deuxième configuration. En effet, sur la durée de vie du circuit d'alimentation électrique 100, 200, la première configuration devrait constituer la majeure partie du temps de fonctionnement, notamment plus de 90%, en particulier dans les pays faiblement soumis à des problèmes sérieux de réseau électrique. On peut donc se permettre un rendement plus faible dans la deuxième configuration pour ces interrupteurs.

De manière connue en soi, pour éviter une casse des interrupteurs lors du changement entre les première et deuxième configurations, il est préférable de prévoir un chemin de roue libre pour dissiper d'éventuelles charges résiduelles. L'ordre de fermeture/ouverture des interrupteurs peut permettre d'y parvenir.

## Revendications

1. Circuit d'alimentation sans interruption (100, 200) comprenant un circuit onduleur configuré pour être connecté à un premier réseau électrique alternatif (20), ledit circuit d'alimentation (100, 200) étant en outre configuré pour adopter :
i. une première configuration pour une alimentation du premier réseau électrique alternatif (20) à partir d'un deuxième réseau électrique alternatif (30), première configuration dans laquelle un circuit correcteur de facteur de puissance est configuré pour être connecté au deuxième réseau électrique alternatif (30) de manière à délivrer une tension continue au circuit onduleur, ledit circuit correcteur de facteur de puissance comprenant une inductance (L1), et un premier bras d'interrupteurs (B1) appartenant au circuit correcteur de facteur de puissance et au circuit onduleur ; et
ii. une deuxième configuration pour une alimentation du premier réseau électrique alternatif (20) à partir d'une source de tension continue (40), deuxième configuration dans laquelle un circuit convertisseur DCDC est configuré pour être connecté à la source de tension continue (40) de manière à délivrer une tension continue au circuit onduleur, ladite inductance (L1) appartenant en outre audit circuit convertisseur DCDC.

2. Circuit d'alimentation sans interruption (100, 200) selon la revendication 1, dans lequel le circuit correcteur de facteur de puissance comprend un deuxième bras d'interrupteurs (B2) dont les bornes sont connectées aux bornes du premier bras d'interrupteurs (B1), une première borne de ladite inductance (L1) étant connectée au point milieu d'un des premier et deuxième bras (B1, B2), le point milieu de l'autre bras formant une première borne d'entrée du circuit correcteur de facteur de puissance et une deuxième borne de ladite inductance (L1) formant une deuxième borne d'entrée du circuit correcteur de facteur de puissance, lesdites première et deuxième bornes du circuit correcteur de facteur de puissance étant configurées pour être connectées au deuxième réseau électrique alternatif (30).

3. Circuit d'alimentation sans interruption (100, 200) selon la revendication 2, dans lequel le circuit convertisseur DCDC comprend en outre le bras d'interrupteurs auquel ladite inductance (L1) est connectée.

4. Circuit d'alimentation sans interruption (100, 200) selon l'une des revendications précédentes, dans lequel, dans les première et deuxième configurations, le circuit onduleur comprend un troisième bras d'interrupteurs (B3) dont les bornes sont connectées au premier bras d'interrupteurs (B1), le point milieu du troisième bras (B3) formant une première borne de sortie (121, 221) du circuit onduleur, ladite première borne de sortie (121, 221) du circuit onduleur et une deuxième borne de sortie (122, 222) du circuit onduleur étant configurées pour être connectées au premier réseau électrique alternatif (20).

5. Circuit d'alimentation sans interruption (100, 200) selon les revendications 2 et 4, dans lequel le bras d'interrupteurs du correcteur de facteur de puissance non connecté à l'inductance (L1) forme un bras de l'onduleur dans la deuxième configuration, le point milieu de ce bras formant la deuxième borne de sortie (122, 222) du circuit onduleur.

6. Circuit d'alimentation sans interruption (100) selon la revendication 5, dans lequel l'inductance (L1) est connectée au premier bras d'interrupteurs (B1) et, dans la deuxième configuration, le point milieu du deuxième bras d'interrupteurs (B2) forme la deuxième borne de sortie (122) du circuit onduleur.

7. Circuit d'alimentation sans interruption (200) selon la revendication 5, dans lequel, l'inductance (L1) est connectée au deuxième bras d'interrupteurs (B2), et dans la deuxième configuration, le point milieu du premier bras (B1) forme la deuxième borne de sortie (222) du circuit onduleur.

8. Circuit d'alimentation sans interruption (100, 200) selon l'une des revendications 4 à 7, dans lequel, dans la première configuration, le point milieu du premier bras d'interrupteurs (B1) forme la deuxième borne de sortie (122, 222) du circuit onduleur.

9. Circuit d'alimentation sans interruption (100, 200) selon l'une des revendications précédentes, dans lequel, dans la première configuration, un point milieu du premier bras d'interrupteurs (B1) est destiné à être connecté au neutre du premier réseau alternatif (20) et au neutre du deuxième réseau alternatif (30).

10. Circuit d'alimentation sans interruption (100, 200) selon l'une des revendications précédentes, comprenant une capacité de liaison continue (130, 230) connectée aux bornes du premier bras d'interrupteurs (B1).

11. Circuit d'alimentation sans interruption (100, 200) selon l'une des revendications précédentes, comprenant un ensemble d'interrupteurs (Rg, Rb, Rc) configurés pour permettre un basculement entre la première et la deuxième configuration et vice-versa.

12. Circuit d'alimentation sans interruption (100, 200) selon la revendication précédente, dans lequel l'ensemble d'interrupteurs comprend deux interrupteurs (Rg) configurés pour respectivement dans la première et la deuxième configuration, connecter et déconnecter le circuit correcteur de facteur de puissance à la deuxième alimentation électrique alternative (30).

13. Circuit d'alimentation sans interruption (100, 200) selon la revendication 11 ou 12, dans lequel l'ensemble d'interrupteurs comprend un interrupteur (Rb) configuré pour respectivement dans la première et la deuxième configuration, déconnecter et connecter la source de tension continue à ladite inductance (L1).

14. Circuit d'alimentation sans interruption (100) selon la revendication 6 et l'une des revendications 11 à 13, dans lequel l'ensemble d'interrupteurs comprend un interrupteur (Rc) configuré pour, dans la première configuration, connecter la deuxième borne de sortie (122) du circuit onduleur avec le point milieu du premier bras d'interrupteurs (B1), et pour, dans la deuxième configuration, connecter la deuxième borne de sortie (122) du circuit onduleur avec le point milieu du deuxième bras d'interrupteurs (B2).

15. Circuit d'alimentation sans interruption (100, 200) selon l'une des revendications précédentes, configuré pour adopter la deuxième configuration en cas de défaillance du deuxième réseau électrique alternatif (30).
